# EUROPEAN PATENT SPECIFICATION

(11) **EP 0 640 192 B1**
(45) Date of publication and mention of the grant of the patent: **13.11.1996**
(21) Application number: 93909732.5
(22) Date of filing: 20.05.1993
(51) Int. Cl.: F16F 15/32

(54) **AN UNBALANCE COMPENSATING METHOD AND APPARATUS**
METHODE UND VERFAHREN ZUR KOMPENSIERUNG EINER UNWUCHT
PROCEDE ET APPAREIL DE COMPENSATION DE BALOURD

(30) Priority: 21.05.1992 CA 2069120
(43) Date of publication of application: 01.03.1995
(73) Proprietor: ETI TECHNOLOGIES INC., St. Peter Port, Guernsey, Channel Islands GY1 3DQ (GB)
(72) Inventor: TAYLOR, Gary, R., Calgary, Alberta T2X 1T4 (CA); GASAFI, Anton +di, (CA)
(74) Representative: Williams, John Francis
(86) International application number: CA9300218
(87) International publication number: WO9323687

(56) References cited:
- GB-A- 832 048
- NL-C- 97 059
- US-A- 2 331 756
- US-A- 3 433 534
- US-A- 3 464 738
- US-A- 3 799 619
- US-A- 3 953 074
- US-A- 4 674 356
- US-A- 4 905 776
- PATENT ABSTRACTS OF JAPAN vol. 10, no. 73 (M-463)(2130) 22 March 1986 & JP-A-60 215 137

## Description

### INTRODUCTION

This invention relates to a balancing method and member and, more particularly, to a balancing method and member used for dynamically balancing an out of balance condition in a rotating body.

### BACKGROUND OF THE INVENTION

Many different apparatuses for balancing an out of balance condition in a rotating body are known. Such apparatuses generally include a counterweight having a weight of a predetermined value which is located at a predetermined position from the axis of rotation to oppose an imbalance in the rotating body. The magnitude of the imbalance is generally known and, accordingly, the necessary weight and position of the counterweight can be calculated so that the weight is positioned where it will act to counter the known imbalance. These apparatuses function satisfactorily for most purposes under which they are employed but are not precise or useful enough for other applications.

Under dynamic conditions; that is, when a body is rotating about an axis and an imbalance in the rotating body develops because of external conditions or otherwise, the prior art is much less satisfactorily developed. For example, in a drill bit or in a drillstring, vibration induced forces during operation can create severe unbalances. One technique used to counteract such imbalances is disclosed in U.S. Patent 4,905,776 (Beynet et al), and which includes the features in the pre-characterising part of each of the claims 1 and 10. Beynet et al teach a vibration dampening assembly with a plurality of annular grooves or races located about the periphery of the assembly and extending axially therealong. A plurality of balls or rollers are located in each of the races being all the same size and defines known prior art. Such balls or rollers are free to move along the races and thereby counteract the imbalance forces.

A further similar structure is disclosed in U.S. Patent 4,674,356 (Kilgore). Kilgore teaches a plurality of balls freely movable in a race formed in an outer circumferential surface of the body which balls are used to counterbalance an imbalance in the rotating member.

There are, however, disadvantages in such prior art. Although the Beynet et al reference is satisfactory to remove large imbalances from the rotating body, it is difficult to utilise the teachings of Beynet et al where the length of the balancing apparatus is necessarily restricted which is often the case. Likewise, while the teachings of Beynet et al are satisfactory to generally remove large imbalances from the drillstring, there is no provision therein for removing all or most of the remaining imbalance thereafter, particularly the imbalance that may remain when the balls in the races of Beynet et al are located at their optimum positions in the races to counteract the imbalance.

This latter problem is also inherent in the above mentioned Kilgore reference. Kilgore teaches two counterbalance structures, one located at each end of a shaft, to offset the imbalance in the shaft or the unbalanced forces in the rotating structure which is movable with the shaft. It the balls are not located at their optimum positions, the imbalance in the shaft will not be removed.

Netherlands Document NL, C, 97059 (Frame S. A.) discloses a washing machine having two circumferential races with movable weights located in each race and including the features in the pre-characterising portion of claim 13.

### SUMMARY

According to one aspect of the invention, there is provided a counterbalance structural member rotatable about an axis as specified in claim 1.

According to a further aspect of the invention, there is provided a method of dynamically balancing a rotating member as specified in claim 10.

According to yet a further aspect of the invention, there is provided a washing machine as specified in claim 13.

### BRIEF DESCRIPTION OF THE SEVERAL VIEWS OF THE DRAWINGS

Specific embodiments of the invention will now be described, by way of example only, with the use of drawings in which:
Figure 1 is a side sectional diagrammatic view of a first embodiment of the counterbalance member according to the invention;
Figure 2 is an end view taken along II-II of Figure 1;
Figure 3 is a side sectional diagrammatic view of a second embodiment of the counterbalance member according to the invention;
Figure 4 is an end view taken along IV-IV of Figure 3;
Figure 5 is side sectional view of yet a further embodiment of the counterbalance member according to the invention;
Figure 6 is a side sectional diagrammatic view of yet a further embodiment of the counterbalance member according to the invention;
Figure 7 is a side sectional diagrammatic view of the member of Figure 6 illustrated in its operating position;
Figures 8A and 8B are end views of a further embodiment of the invention mounted about a shaft and illustrating the counterbalance member in assembled and disassembled condition about the shaft, respectively;
Figure 9 is a diagrammatic side view of yet a further embodiment, the counterbalance member according to the invention being operably located within a shaft;
Figure 10 is a diagrammatic end view taken along X-X of Figure 9 illustrating a representative position of the movable weights during rotation of the shaft in which the member is located; and
Figure 11 is a view of a counterbalance member showing part of an embodiment of the invention by illustrating the vertical radial from the axis of the member.
Figure 12 is a diagrammatic cross-sectional view of a ball retaining apparatus showing part of a further embodiment of the invention;
Figure 13 is a diagrammatic cross-sectional view of a ball retaining pin apparatus as part of a further embodiment of the invention;
Figure 14 is a cross-sectional view of two versions of counterbalance structural members according to the invention, either of which might be used with an ordinary ball bearings;
Figure 15A is a diagrammatic view of the outside of the tub of a washing machine with counterbalance structural members mounted thereon;
Figure 15B is a diagrammatic view taken along 15B-15B of Figure 15A;
Figure 15C is a diagrammatic view taken along 15C-15C of Figure 15A;
Figure 16 is a diagrammatic view of the rear end drive axle and differential of a vehicle; and
Figure 17 is a view of a typical crankshaft which is connected to a piston of a compressor with counterbalance structural members attached according to the invention.

### DESCRIPTION OF SPECIFIC EMBODIMENT

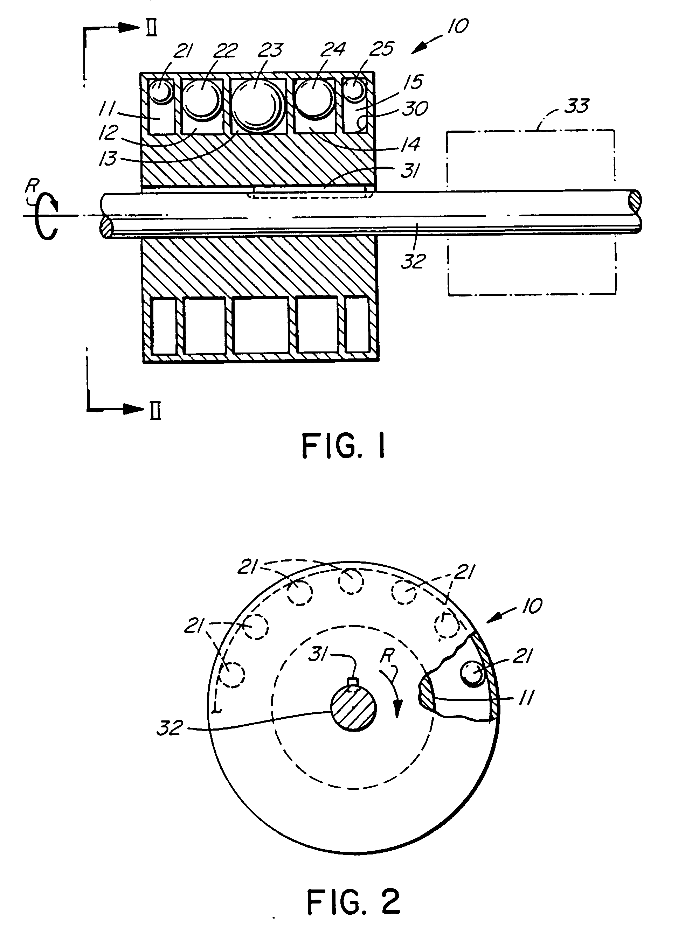

Referring now to the drawings, a counterbalance structural member according to the invention is illustrated generally at 10 in Figure 1. It comprises a first set of annular grooves 11, 12, 13, 14 and 15, it being understood that oppositely located grooves 11, 15 are conveniently identical and that oppositely located grooves 12, 14 are also conveniently identical.

A plurality of weights 21, 22, 23, 24, 25, conveniently spherical in the form of balls, are mounted in the grooves 11, 12, 13, 14, 15, respectively. The plurality of weights in each of the grooves are all the same size and weight; that is, the weights 21 in groove 11 are all the same size and weight, the weights 22 in groove 12 are all the same size and weight and so on. It is important, however, that the weights in at least two of the grooves be different in size and weight; that is, the weights 23 in groove 13 are preferably larger and heavier than the weights 24 in groove 14.

The balls 21, 22, 23, 24, 25 are freely movable in their respective grooves 11, 12, 13, 14, 15 about the circumference of the counterbalance member 10. A silicon lubricant 30 is added to the counterbalance member 10 in order to reduce the friction between the balls and their respective races or grooves and to also reduce the noise made by the balls when the counterbalancing apparatus is in operation as will be described hereafter.

The balls 21, 22, 23, 24, 25 are manufactured from a hardened material such as carbide. Likewise, the races or grooves 11, 12, 13, 14, 15 are hardened. The hardening is desirable in order to retard or prevent the formation of "flats" on the balls or races which tend to reduce the ability of the balls to move freely within the grooves or races and thereby retard the effectiveness of the counterbalancing movement of the balls.

### OPERATION

In operation, the counterbalance structural member 10 is installed on shaft 32 so as to fixedly rotate therewith such as by using a key 31 between the member 10 and the shaft 32. The operation of an unbalanced member generally illustrated at 33, which creates an out of balance condition, is initiated and shaft 32 rotates with member 33 and counterbalancing apparatus 10 as illustrated.

As an out of balance condition originates within member 33, the balls 21, 22, 23, 24, 25 in each of the grooves 11, 12, 13, 14, 15 move and act to counterbalance the out of balance condition.

It is difficult to precisely state the principle by which the balls are known to move and while it is believed that empirical data will subsequently lead to fomulae and better understanding to predict the optimal behaviour of the counterbalance member 10, the following explanation is given with the expectation that further information presently not known will amplify, modify or change such explanation.

It is believed that the larger balls 23 in groove 13 will remove the larger out of balance condition in member 33. The somewhat smaller balls 22, 24 in grooves 12, 14 will act to remove the somewhat smaller out of balance condition in member 33. Finally, the smallest balls 21, 25 in grooves 11, 15 will act to remove the smallest out of balance condition in member 33. Thus, the entire out of balance condition in member 33 is removed by "fine tuning"; that is, by removing the imbalance under dynamic conditions with a plurality of different sized balls positioned in separate grooves which balls optimally remove different degrees of imbalance.

With reference to Figure 2 which illustrates the leftmost groove 11 of Figure 1 with the balls 21 in a representative and dynamic balanced position offsetting the unbalance in member 33, as viewed with a timing light adjusted for appropriate shaft r.p.m., it has been found that the optimum behaviour for the balls 21 occurs when they do not contact each other in the dynamically balanced position as in illustrated. It has been found that when many of the balls 21 come into contact with each other, the balancing phenomenum is not optimal and modification of the counterbalancing member 10 may be necessary by way of structural or weight changes.

The embodiment of the invention illustrated in Figures 1 and 2 is conveniently used when there is a large potential imbalance problem in member 33 under dynamic operating conditions. If the potential imbalance problem in member 33 is small, the number of grooves and associated balls therein can be reduced to as few as two (2), with all of the balls in each respective groove being the same size and weight and the balls of the first groove being different in size and weight from the balls of the second groove, the former balls acting to remove the large imbalance and the latter balls acting to remove a smaller remaining imbalance.

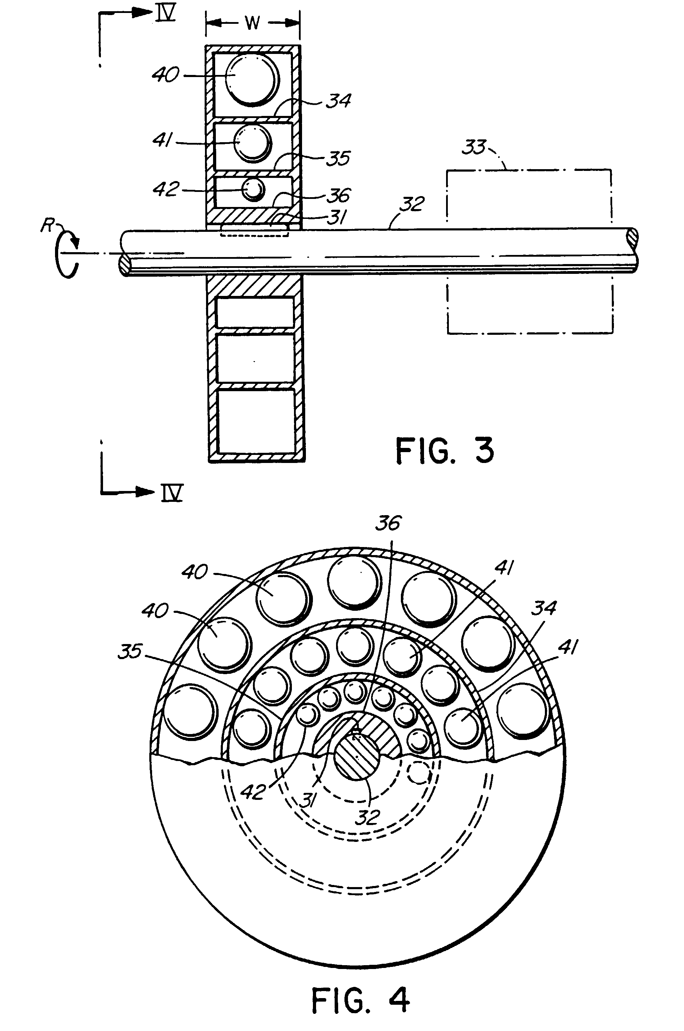

Referring now to Figures 3 and 4, there is illustrated a further embodiment which is desirable when the width "W" as illustrated in Figure 3 is limited. In this embodiment, there are three grooves or races 34, 35, 36 with balls 40, 41, 42 mounted therein, respectively. The balls 40 in groove 34 are all the same size and weight. The balls 41 in groove 35 are likewise all the same size and weight and the balls 42 in groove 36 are likewise all the same size and weight. The balls 40 in groove 34, however, are larger and heavier than the balls 41 in groove 35 which, in turn, are larger and heavier than the balls 42 in groove 36. Under operating conditions and when an imbalance occurs in member 33 during rotation of shaft 32, the balls 40, 41, 42 will assume positions which counter the imbalance. A representative view of the positions of balls 40, 41, 42 illustrated in Figure 4 would be positions where the imbalance is removed optimally; that is, and as earlier described, the balls in each race or groove do not contact each other.

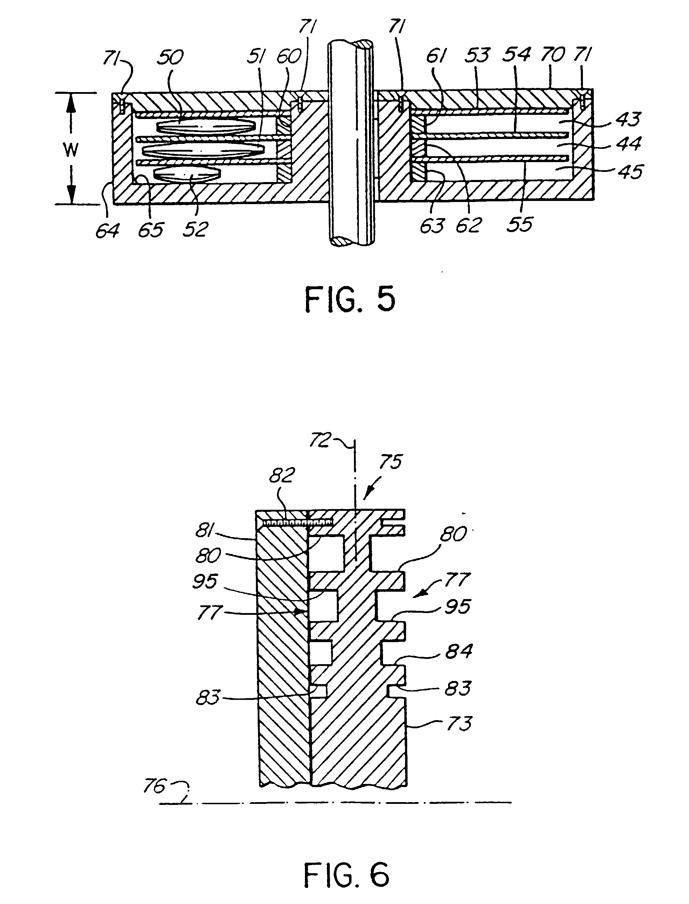

A further embodiment of the invention is illustrated in Figure 5. In this embodiment, wherein the width "W" is again of concern, a first plurality of cylindrical disc-like weights 50, 51, 52 are positioned to be freely movable in each of the grooves 43, 44, 45 which grooves 43, 44, 45 are formed by circumferential dividers 53, 54, 55 which are positioned over hub 60 and between spacers 61, 62, 63. A silicon lubricant 65 is added to the interior of the housing 64 and a closure member 70 is connected to the housing 64 by the use of cap screws 71.

In operation, the housing 64 is fixedly mounted on the rotating shaft 32 as described in association with the method of Figure 1. As an imbalance arises in member 33, the cylindrical weights 50, 51, 52 will freely move within the grooves 43, 44, 45 until they assume a position wherein they counterbalance the imbalance occurring in the member 33. It has been found that it is preferable to give the sides of the cylindrical disks 50, 51, 52 a slight bow in order that the discs 50, 51, 52 contact the dividers 53, 54, 55 with a minimal surface area wherein they are not influenced by any possible suction which might otherwise occur between the dividers 53, 54, 55, the silicon lubricant 65 used and the discs 50, 51, 52 of the Figure 5 embodiment. It is preferable that the cylinders or discs 50, 51, 52 move as freely as possible within the grooves 43, 44, 45 between the dividers 53, 54, 55 as is likewise true for the weights and balls of the Figures 1 and 3 embodiments.

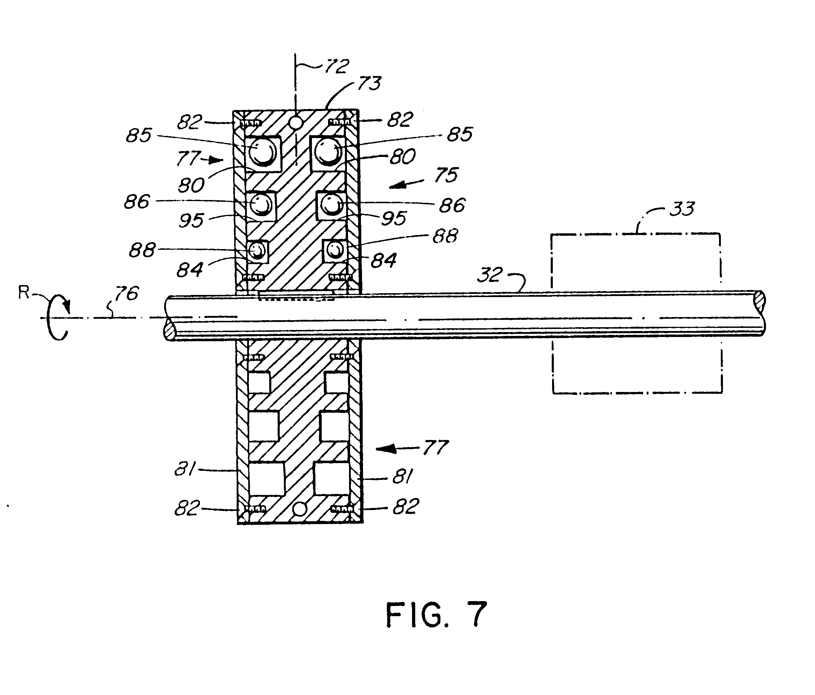

Yet a further embodiment of the invention is illustrated in Figures 6 and 7, Figure 6 illustrating four grooves or races 80,83,84,95 and Figure 7 illustrating only three grooves or races 80,84,95. In this embodiment, the counterbalance structural member generally illustrated at 75 is symmetrical about both axes 76, 72 and is mounted to a shaft 32 (Figure 7) similar to the Figure 1 embodiment.

In this embodiment, however, a central circumferential member 73 made from a solid piece of material is machined with a plurality of annular grooves generally illustrated at 77 on both faces. Balls (Figure 7) 85, 86, 88 are mounted in the grooves 80, 95, 84 (Figure 7), the balls 85 mounted in the outermost groove 80 being the largest and the balls 88 (Figure 7) in the innermost groove 84 being the smallest. After providing the silicon lubricant within each of the grooves, two end plates 81 are mounted to the central circumferential member 73 by the use of cap screws 82. The operation is similar to the operation of the Figure 3 embodiment; that is, when an imbalance occurs in member 33, the balls in each groove will assume a position wherein the imbalance is removed.

It is not again presently known why such is the case, but it has been found that seven balls or weights in each groove or annular space of each of the embodiments appear to be an optimal number. It is, however, also believed that a greater or smaller number of balls or weights would usefully serve to remove various imbalances under various operating conditions.

A rule of thumb has arisen which has been helpful to the applicant in its current product development. It has been found that the quantity of the imbalance that may be potentially removed from an out of balance member by the counterbalancing member is the sum of the weights in each of the grooves or races of the counterbalancing member.

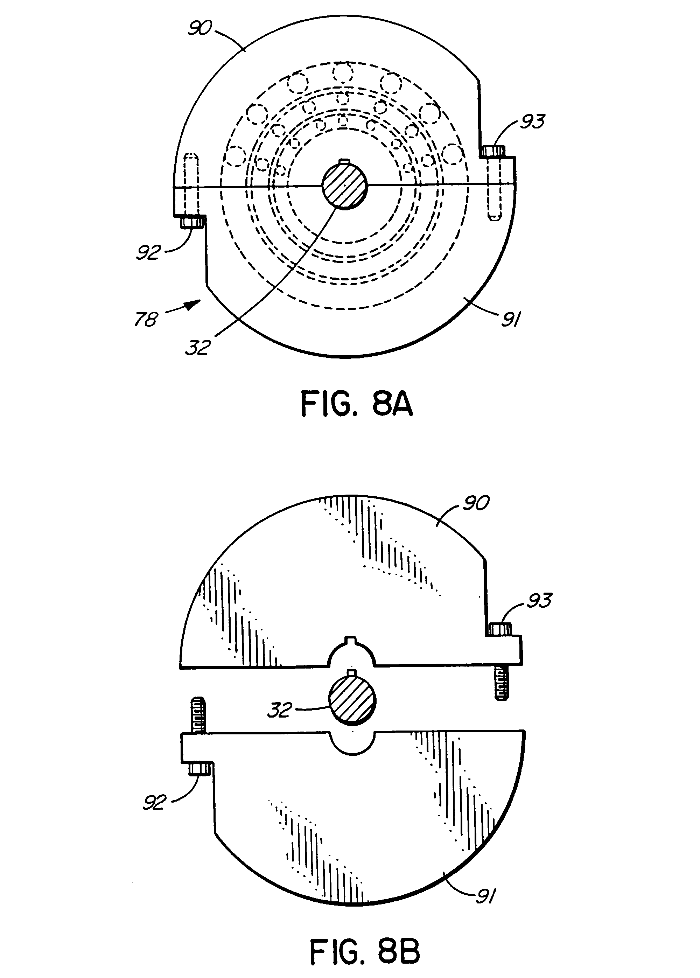

A further embodiment of the invention is illustrated in Figures 8A and 8B. In this embodiment, the counterbalance structural member 78 according to the invention is illustrated as being made from two sections 90, 91, which sections are mounted about shaft 32 by cap screws 92, 93 and which sections 90, 91 are freely removed from shaft 32 by removing the cap screws 92, 93. This embodiment is particularly useful where minimal modifications are desirably made to the rotating shaft 32 or to the out of balance member 33. Rather, the counterbalance structural member 78 is simply connected to the shaft 32 at a position where it is possible so to attach the counterbalance structural member 78 and the cap screws 92, 93 are tightened to firmly couple the apparatus 78 to the shaft 32.

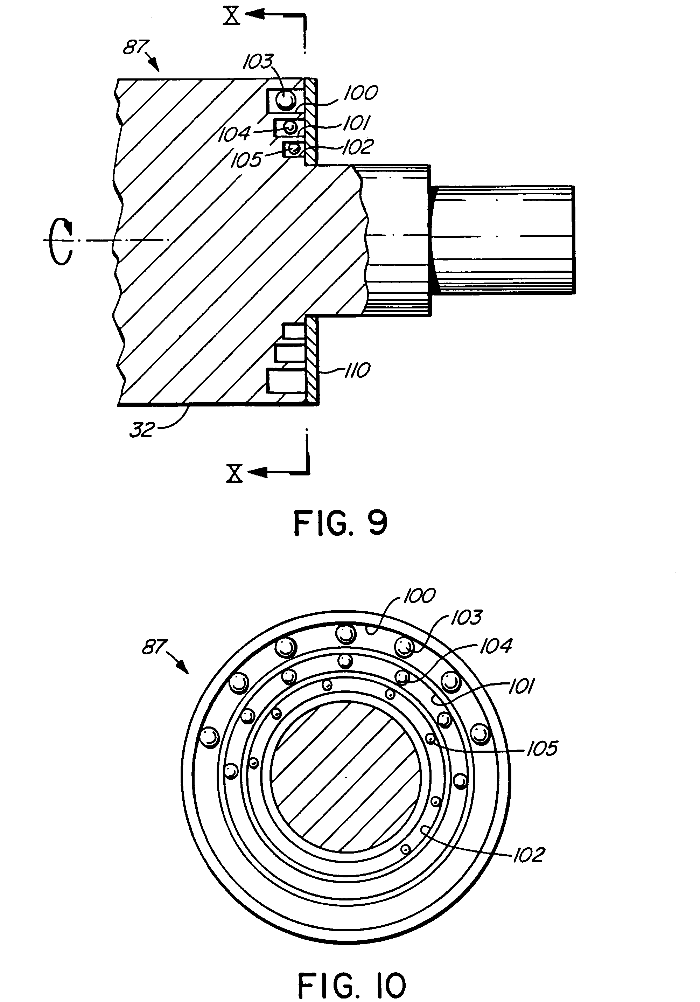

Yet a further embodiment is illustrated in Figures 9 and 10. In this embodiment, it is contemplated that the counterbalance structural member 87 is mounted inside the outer circumference of a rotating shaft 32. As illustrated in Figure 9, the grooves or races 100, 101, 102 are machined directly into the solid material of shaft 32 and the balls 103, 104, 105 are positioned directly therein for free movement relative thereto. A cover 110 is connected to the shaft 32 and the balls 103, 104, 105 are thereby retained. In operation, as an out of balance condition occurs either in the out of balance member 33 (Figure 1) or in shaft 32 itself, the balls 103, 104, 105 will orient themselves in a configuration such as the configuration illustrated in Figure 10. In such positions, the shaft 32 and/or the unbalanced member 33 is balanced by the position of the balls 103, 104, 105 under dynamic operation conditions.

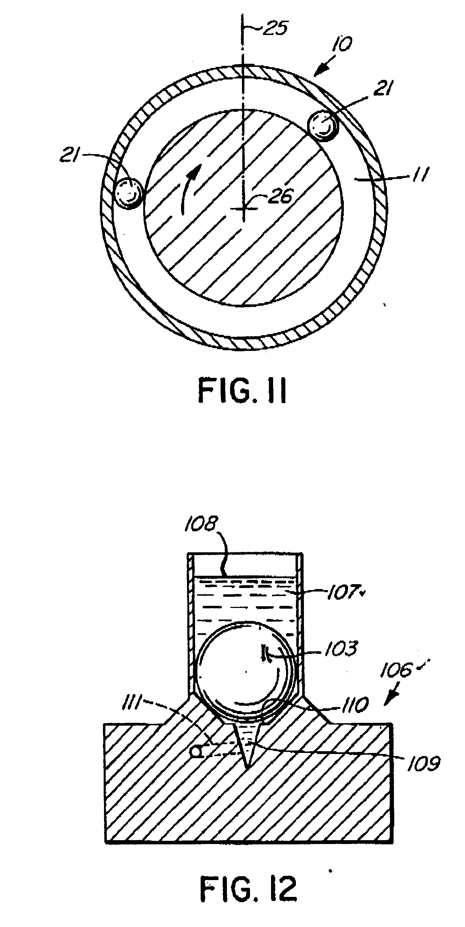

It has bean found that under certain conditions and particularly at lower r.p.m.'s of the counterbalancing member 10, the weights 21 (Figure 11) will tend to remain in a substantially stationary position in the groove 11 until the revolutions per minute of the counterbalancing member increase to the point where the weight 21 is carried around the uppermost point of the inside diameter of the groove 11 or from one side of the radial 25 to the other or until the centrifugal force acting on the weights forces them outwardly until they are in an operating engagement with the outer surface of the groove 11 which will then exert a certrain friction force that will tend to carry them around with the groove 11. After operating speeds occurs, the weights 21 will then quickly rearrange themselves with minimal movement so as to properly balance any unbalance condition. It has been found, for example, that at higher rotational speeds of the counterbalance structural member the weights 21 within the grooves will quickly rearrange themselves to set off any imbalance in the device. However, at low speeds, this not always the case and, accordingly, it is convenient to utilise means to move the weights with the groove or, at least, to provide a force on the movable weights which will tend to move the weight with the groove as it rotates about its axis.

Any delay in removing the imbalance is not advantageous since if a shaft, for example, being in balance and rotating, suddenly encounters an out-of-balance condition, it is conceivable that the weights 21 may not move quickly enough to remove the out-of-balance condition before damage results to the system.

The means used to improve the "quickness" with which the system responds to remove the out-of-balance condition can take several forms. It is, for example, contemplated that a substance could be added to the grooves 11 so that a force is imparted to the weights 21 which force will be such that the weights 21 will move from a stationary position as indicated to a position "over-the-top" of the member 10 and from one side of the radial 25 extending from the axis 26 of the member 10 to the opposite side. Alternatively, mechanical or electrical means could be used.

With reference to Figure 11, it is contemplated that the initial movement of the weights 21 within the groove 11 may occur by the addition of a substance to the grooves 11 that will initially give a degree of force to the weight so that the movement of the weights 21 is initiated by the substance. For example, such a substance could be a fluid of a consistency to impart the rotational movement to the weights, such as grease. An exhaustive list of all such substances is not immediately contemplated but such a list might include virtually any substance to initiate movement of the weights 21. Even sand is contemplated as such a substance but, of course, sand may be inappropriate because of contamination and eventual binding of the weights 21 within the groove 11 which would affect normal operation where quickness of weight movement may not be necessary.

It is also contemplated that the initial weight movement could be initiated externally of the counterbalancing member 10. For example, if the weights 21 were made of a magnetic material, an external probe (not illustrated) could apply a suitable magnetic field to the weights 21 which would allow the weights 21 to immediately commence movement in the event an unbalanced condition is encountered. This would be intended to reduce the rotation time of the weights 21 so that the unbalanced condition can be removed and would thereby reduce the chance of damage to the out-of-balance apparatus.

Reference is made to Figure 12 which illustrates the counterbalance structural member generally illustrated at 106. A liquid 107 is added to the counterbalance structural member 106 and takes a level 108 above the movable weight in the form of ball 103. A V-shaped groove 109 is formed in groove 110 in which ball 103 is intended to move. The V-shaped groove 109 has a plurality of passages 111 which extend from the groove 109 to a liquid reservoir (not illustrated).

In operation and when the counterbalance structural member 106 begins to rotate, the liquid 107 will tend to rotate with the groove 110 and, therefore, will exert a force on ball 103 which tend to rotate the ball 103 with the groove 110. As the speed of rotation of the counterbalance structural member increases, the centrifugal force on the liquid will increase and, therefore, there will be a tendency for the liquid 107 to exit through passageway 111 and thereby to terminate any further influence over the movement of ball 103 which, by that time, will be rotating at the same speed as the counterbalance structural member 106. This is beneficial for the previously mentioned reasons, namely that if the balls 103 move quickly at speed, any imbalance arising will be quickly corrected.

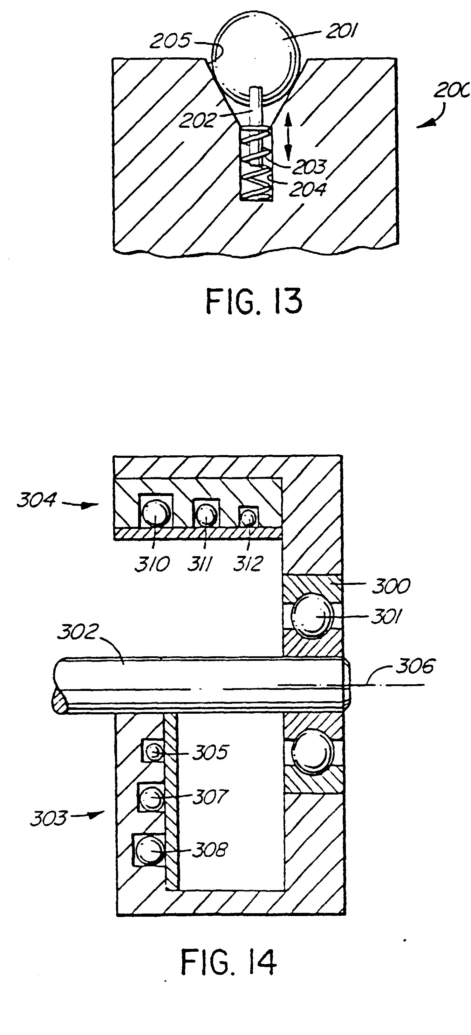

A further embodiment is made with reference to Figure 13. The counterbalance structural member generally illustrated at 200 includes a movable weight in the form of a ball 201 and included a pin 202 which is spring mounted within a radially inwardly extending opening 204. A compression spring 203 acts on the pin 202 to force it outwardly in the position indicated and thereby restrains movement of the ball 201 upon rotation of the counterbalance structural member.

As the counterbalance structural member 200 commences to rotate, the pin 202 will cause the ball 201 to rotate with the groove 205. The speed will increase and as it does so, the centrifugal force acting on the pin 202 will tend to move the pin 202 inwardly in opening 204 thus allowing the balls 201 to rotate freely in the groove 205 thereby to freely assume any position to connect an imbalance in the rotating machinery to which the counterbalance structural member 200 is attached.

Reference is now made to Figure 14 which diagrammatically illustrates two embodiments of the invention which may each be individually used with a bearing 300 having standard balls 301 mounted so as to allow rotation of shaft 302 with reduced friction and it will be appreciated two different devices are illustrated in Figure 14 for the purpose of expediency. To remove any imbalances in the shaft 302, either a counterbalance structural member 303 or counterbalance structural member 304 may be utilized.

Counterbalance structural member 303 is connected so that it rotates with the shaft 302 and the movable weights in the form of balls 305, 307, 308 move about axis 306 of shaft 302 concentrically and forming rotating planes which are transverse to the direction of axis 306. In counterbalance structural member 304, the weights in the form of balls 310, 311, 312 rotate circumferentially and form planes of rotation which are longitudinal or parallel to the axis 306 of the shaft 32.

The balls 305, 307, 308 are of different diameters and this applies likewise to the diameter of balls 310, 311, 312. Either configuration may be useful depending upon the geometrical considerations present in the system which is being used which includes shaft 302 and bearing 300.

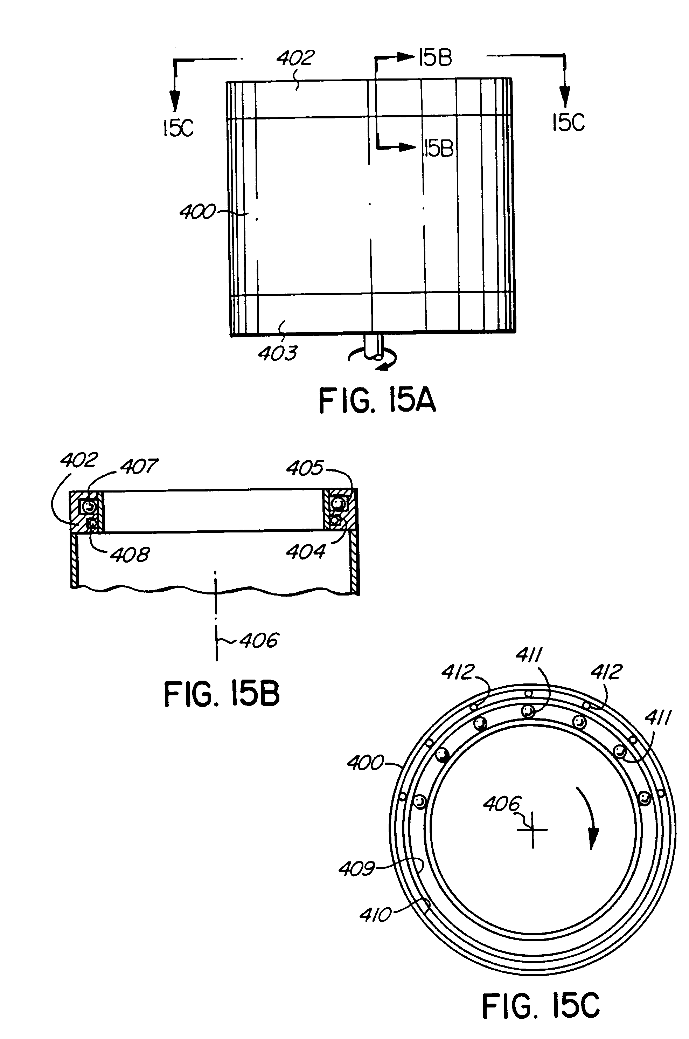

Reference is now made to Figure 15A which illustrates the water containing cylinder or "tub" 400 of an ordinary washing machine. Two counterbalance structural members 402, 403 are connected to the tub 400 to remove any imbalance upon operation although one, of course, may be sufficient to remove imbalances. The counterbalance structural members 402, 403 may again take two different forms.

Referring initially to Figure 15B, the counterbalance structural member 402 may take the form of a plurality of grooves 404, 405 which extend circumferentially about axis 406 longitudinally or parallel to the axis 406. Movable weights in the form of balls 407, 408 are mounted in the grooves 404, 405 and serve to remove imbalances when the tub 400 is rotated.

Alternatively, the counterbalance structural member 402 may have grooves 409, 410 machined transverse to axis 406. The balls 411, 412 are movable in their respective grooves 409, 410 and, again, remove imbalances when the tub 400 rotates about axis 406.

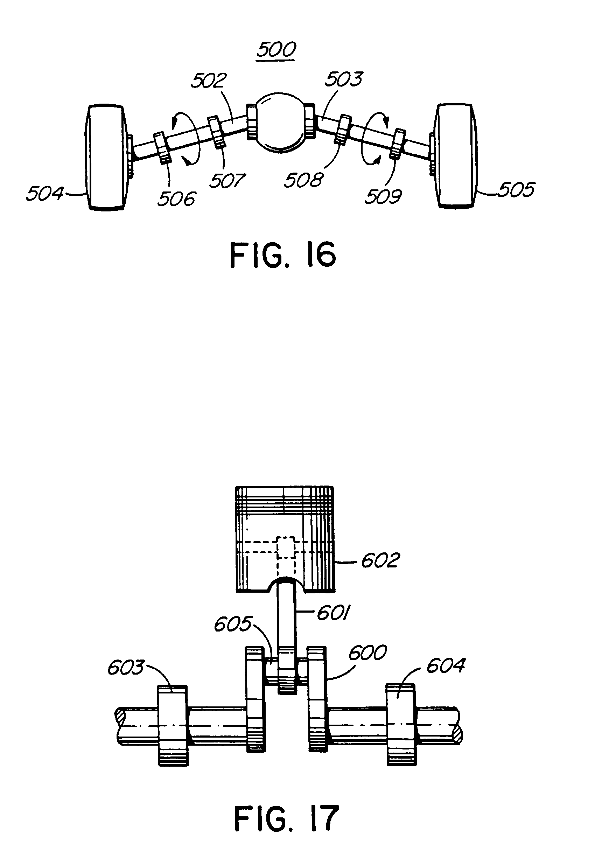

Yet a further embodiment of the invention is illustrated in Figure 16 in which the rear end of a vehicle 500 is diagrammatically shown. A gear box or differential has two axles 502, 503 extending outwardly from the gearbox and connect to rear wheels 504, 505 which, of course, rotate with axles 502, 503 when the vehicle is under operation.

An imbalance may arise in the system. For example, the tires 504, 505 may become out of balance for various reasons including the fact that flats form on the tires. This is particularly true in formula race cars where the speeds of the cars vary greatly throughout a circuit and the tires are subjected to highly variable forces.

To correct the imbalance, counterbalance structural members 506, 507 may be added to axles 502, 503, although only one per axle may be required. These would function in the same way as has been discussed as the axles 502, 503 rotate both axially and about gearbox as is illustrated. In the event the rotation about gearbox is not severe, it may be convenient to mount the counterbalance structural members 508, 509 on the axles 502, 503 as is shown in Figure 16.

Reference is now made to Figure 17 which illustrates a crankshaft 600 having a crankpin 605 to which is attached piston rod 601 which is connected to piston 602. Piston 602 may be used, for example, in a compressor. Two counterbalance structural members 603, 604 are connected to crankshaft 600 as illustrated. The operation of each is similar to the operations described and they serve to continuously remove imbalances in the system as previously set forth.

While it is presently anticipated that the counterbalancing apparatus according to the invention be made from a metallic material, it is also contemplated that other materials may well be appropriate such as composite material structures and plastic or the like, depending on the operating conditions under which the counterbalancing apparatus is intended to function.

While specific embodiments of the invention have been described, such embodiments should be considered as illustrative of the invention only and not as limiting its scope as defined in accordance with the accompanying claims.

## Claims

1. A counterbalance structural member rotatable about an axis, said member comprising first and second annular grooves (34, 35) concentric to said axis and extending around said axis, a first plurality of weights (40) freely movable in said first annular groove (34), a second plurality of weights (41) freely movable in said second annular groove (35), said first plurality of weights (40) in said first annular groove (34) being substantially the same weight and size, said second plurality of weights (41) in said second annular groove (35) being substantially the same weight and size, characterized in that said weight and size of said second plurality of weights (41) in said second annular groove (35) are different from said weight and size of said first plurality of weights (40) in said first annular groove (34).

2. A counterbalance structural member as in claim 1 wherein said first and second annular grooves (11, 12) are located on the outside circumference of said structural member (10), said grooves (11, 12) being longitudinally separated by a portion of said outside circumference.

3. A counterbalance structural member as in claim 2 wherein said first and second plurality of weights (21, 22) are spherical.

4. A counterbalance structural member as in claim 2 wherein said first and second plurality of weights (50, 51) are cylindrical and disc-like.

5. A counterbalance structural member as in claim 1 wherein said first groove (34) is an outer groove located near the outside circumference of said member and said second groove (35) is an inner groove concentric to and positioned inside said first and outer groove (34).

6. A counterbalance structural member as in claim 5 wherein said first plurality of weights (40) in said first outer groove (34) are heavier than said second plurality of weights (41) in said second inner groove (35).

7. A counterbalance structural member as in claim 6 wherein said member comprises first and second substantially symmetrical halves (90, 91) and means (92, 93) to connect said halves (90, 91), said halves being operable to be positioned about a rotating shaft (32).

8. A counterbalance structural member as in claim 5 wherein said first and second annular grooves (80, 81) are formed on one face (73) of said member, said member further comprising a second face (74) opposed to said first face (73), said second face (74) having third and fourth annular grooves (80, 95), a third plurality of weights (85) freely movable in said third annular groove (80), a fourth plurality of weights (86) freely movable in said fourth annular groove (95), said third plurality of weights (85) in said third annular groove being substantially the same weight and size, said fourth plurality of weights (86) in said fourth annular groove (95) being substantially the same weight and size, said weight and size of said fourth plurality of weights (86) being different from said weight and size of said third plurality of weights (85).

9. A counterbalance structural member as in claim 8 wherein the weights in each of said grooves are spherical.

10. A method of dynamically balancing a rotating member comprising the steps of positioning a first plurality of weights (40) having the same size and weight in a first annular groove (34) in a rotating structure, positioning a second plurality of weights (41) having the same size and weight in a second annular groove (35) in said rotating structure and rotating said structure while allowing free movement of said first and second plurality of weights (40, 41) in said first and second annular grooves (34, 35),
characterized in that said weight and size of said second plurality of weights (41) in said second annular groove (35) are different from said weight and size of said first plurality of weights (40) in said first annular groove (34).

11. A method of dynamically balancing a rotating member as in claim 10 wherein the outer inside circumference of said first and second annular grooves (11, 12) are identical.

12. A method of dynamically balancing a rotating member as in claim 10 wherein the first annular groove (34) is coaxial with and located outside said second annular groove (35).

13. A washing machine having a first cylinder rotatable about a container axis, at least one counterbalance structural member (402) having an axis and being mounted concentric to said container axis. said counterbalance structural member (402) having at least two passageways (404, 405), movable weights (407, 408) within each of said passageways (404, 405), said movable weights (407) in said first passageway (405) being all substantially the same size, said movable weights (408) in said second passageway (404) being all substantially the same size, characterized in that the movable weights (408) in said second passageway (404) are a different size from the movable weights (405) in said first passageway (407).

14. A washing machine as in claim 13 wherein said movable weights (408) in said second passageway (404) and said movable weights (405) in said first passageway (407) are spherical.

15. A counterbalancing structural member as in claim 2 or 3 and further comprising a rotatable washing machine part (400), said counterbalancing structural member (402) being operably associated with said washing machine part (400).

## Patentansprüche

1. Ein Konstruktionsteil zum Auswuchten, das mit einer Achse rotiert, wobei besagtes Teil besteht aus zu besagter Achse konzentrischen und um besagte Achse herum angeordneten ersten und zweiten ringförmigen Kammern (34,35), sowie einer ersten Vielzahl frei in besagter erster ringförmiger Kammer (34) beweglicher Gewichte (40) und einer zweiten Vielzahl frei in besagter zweiter ringförmiger Kammer (35) beweglicher Gewichte (41), wobei besagte erste Vielzahl von Gewichten (40) in besagter erster ringförmiger Kammer (34) im wesentlichen von gleicher Größe und gleichem Gewicht sind, und die besagte zweite Vielzahl von Gewichten (41) in besagter zweiter ringförmiger Kammer (35) im wesentlichen von gleicher Größe und gleichem Gewicht sind, dadurch gekennzeichnet, daß besagtes Gewicht und Größe der besagten zweiten Vielzahl von Gewichten (41) in besagter zweiter ringförmiger Kammer (35) sich von besagtem Gewicht und Größe besagter erster Vielzahl von Gewichten (40) in besagter erster ringförmiger Kammer (34) unterscheiden.

2. Ein Konstruktionsteil zum Auswuchten gemäß Anspruch 1, dadurch gekennzeichnet, daß besagte erste und zweite ringförmige Kammern (11,12) auf dem Außenrand besagten Konstruktionsteils (10) positioniert sind, wobei besagte Kammern (11,12) in Längsrichtung getrennt werden durch einen Teilbereich besagten Außenrandes.

3. Ein Konstruktionsteil zum Auswuchten gemäß Anspruch 2, dadurch gekennzeichnet, daß besagte erste und zweite Vielzahl von Gewichten (21,22) kugelförmig ausgebildet sind.

4. Ein Konstruktionsteil zum Auswuchten gemäß Anspruch 2, dadurch gekennzeichnet, daß besagte erste und zweite Vielzahl von Gewichten (50,51) zylindrisch und scheibenförmig ausgebildet sind.

5. Ein Konstruktionsteil zum Auswuchten gemäß Anspruch 1, dadurch gekennzeichnet, daß besagte erste Kammer (34) eine äußere, nahe am Außenrand besagter Vorrichtung positionierte Kammer ist, und daß besagte zweite Kammer (35) eine innere Kammer konzentrisch und nach innen positioniert zu besagter erster außenliegender Kammer (34) ist.

6. Ein Konstruktionsteil zum Auswuchten gemäß Anspruch 5, dadurch gekennzeichnet, daß eine erste Vielzahl von Gewichten (40) in besagter erster äußerer Kammer (34) schwerer ist als besagte zweite Vielzahl von Gewichten (41) in besagter zweiter innerer Kammer (35).

7. Ein Konstruktionsteil zum Auswuchten gemäß Anspruch 6, dadurch gekennzeichnet, daß besagtes Teil besteht aus ersten und zweiten grundsätzlich symmetrischen Hälften (90,91) und Verbindungshilfen (92,93), besagte Hälften (90,91) zu verbinden, wobei besagte Hälften so beschaffen sein müssen, daß sie an einer Rotationswelle (32) befestigt werden können.

8. Ein Konstruktionsteil zum Auswuchten gemäß Anspruch 5, dadurch gekennzeichnet, daß die erste und zweite ringförmige Kammer (80,81) auf einer Seite (73) besagten Teils ausgebildet sind, wobei besagtes Teil sich weiterhin zusammensetzt aus einer zweiten, besagter erster Seite (73) gegenüberliegenden Seite (74), wobei besagte zweite Seite (74) dritte und vierte ringförmige Kammern (80,95) aufweist sowie eine dritte Vielzahl von in besagter dritter ringförmiger Kammer (80) frei beweglichen Gewichten (85), eine vierte Vielzahl von in besagter vierter ringförmiger Kammer (95) frei beweglichen Gewichten (86), wobei besagte dritte Vielzahl von Gewichten (85) in besagter dritter ringförmiger Kammer grundsätzlich von gleichem Gewicht und gleicher Größe ist, und besagte vierte Vielzahl von Gewichten (86) in besagter vierter ringförmiger Kammer (95) grundsätzlich von gleichem Gewicht und gleicher Größe ist, und besagtes Gewicht und Größe besagter vierter Vielzahl von Gewichten (86) sich von besagtem Gewicht und besagter Größe der besagten dritten Vielzahl von Gewichten (85) unterscheiden.

9. Ein Konstruktionsteil zum Auswuchten gemäß Anspruch 8, dadurch gekennzeichnet, daß die Gewichte in jeder der besagten Kammern kugelförmig sind.

10. Eine Methode zum dynamischen Auswucht en eines rotierenden Teils, die darin besteht, daß nach Positionierung einer ersten Vielzahl von Gewichten (40) gleicher Größe und gleichen Gewichtes in einer ersten ringförmigen Kammer (34) in einer rotierenden Vorrichtung, und Positionierung einer zweiten Vielzahl von Gewichten (41) gleicher Größe und gleichen Gewichts in einer zweiten ringförmigen Kammer (35) in besagter rotierender Vorrichtung, besagte Vorrichtung in Rotation versetzt wird, wobei die freie Bewegung von besagter erster und zweiter Vielzahl der Gewichte (40,41) ermöglicht ist in besagter erster und zweiter ringförmiger Kammer (34,35), gekennzeichnet dadurch, daß besagtes Gewicht und Größe von besagter zweiter Vielzahl von Gewichten (41) in besagter zweiter ringförmiger Kammer (35) sich unterscheidet von besagtem Gewicht und Größe der ersten Vielzahl von Gewichten (40) in besagter erster ringförmiger Kammer (34).

11. Ein Verfahren zum dynamischen Auswucht en eines rotierenden Körpers gemäß Anspruch 10, wobei der äußere Innenteil zur Außenwand besagter erster und zweiter ringförmiger Kammern (11,12) identisch sind.

12. Ein Verfahren zum dynamischen Aus wuchten gemäß Anspruch 10, wobei die erste ringförmige Kammer (34) auf gleicher Achse außerhalb besagter zweiter ringförmiger Kammer (35) positioniert ist.

13. Eine Waschmaschine, ausgestattet mit einem ersten über die Container-Achse rotierfähigen Zylinder, zumindest einem Konstruktionsteil zum Auswuchten (402), das eine Achse besitzt und das konzentrisch auf besagter Container-Achse angebracht ist, wobei besagtes Konstruktionsteil zum Auswuchten (402) mindestens zwei Durchgänge (404,405) hat und bewegliche Gewichte (407,408) innerhalb jedes der besagten Durchgänge (404,405) aufweist, wobei alle besagten beweglichen Gewichte (407) in besagtem ersten Durchgang (405) grundsätzlich von gleicher Form sind, und die besagten beweglichen Gewichte (408) in besagtem zweiten Durchgang (404) grundsätzlich von gleicher Form sind, gekennzeichnet dadurch, daß die beweglichen Gewichte (408) in besagtem zweiten Durchgang (404) von anderer Form sind als die beweglichen Gewichte (405) in besagtem ersten Durchgang (407).

14. Eine Waschmaschine gemäß Anspruch 13, wobei besagte bewegliche Gewichte (408) in besagtem zweiten Durchgang (404) und besagte bewegliche Gewichte (405) in besagtem ersten Durchgang (407) kugelförmig sind.

15. Vorrichtung gemäß Anspruch 2 oder 3 und weiterhin beinhaltend ein rotierfähiges Waschmaschinenteil (400), wobei das Konstruktionsteil zum Auswuchten (402) im Zusammenwirken mit besagtem Waschmaschinenteil (400) fungiert.

## Revendications

1. Élément structural d'équilibrage capable de tourner autour d'un axe, ledit élément comprenant des première et deuxième gorges annulaires (34, 35), concentriques audit axe et s'étendant autour de l'axe, une première pluralité de poids (40) librement mobiles dans ladite première gorge annulaire (34), une deuxième pluralité de poids (41) librement mobiles dans ladite deuxième gorge annulaire (35), ladite première pluralité de poids (40) contenus dans ladite première gorge annulaire (34) étant sensiblement de même poids et de même dimension, la deuxième pluralité de poids (41) contenus dans ladite deuxième gorge annulaire (35) étant sensiblement de même poids et de même dimension, caractérisé en ce que ledit poids et ladite dimension des poids de ladite deuxième pluralité de poids (41) contenus dans ladite deuxième gorge annulaire (35) sont différents du poids et de la dimension de ladite première pluralité de poids (40) contenus dans ladite première gorge annulaire (34).

2. Élément structural d'équilibrage selon la revendication 1, dans lequel lesdites première et deuxième gorges annulaires (11, 12) sont situées sur la circonférence extérieure dudit élément structural (10), lesdites gorges (11, 12) étant séparées longitudinalement par une partie de ladite circonférence extérieure.

3. Élément structural d'équilibrage selon la revendication 2, dans lequel lesdites première et deuxième pluralités de poids (21, 22) sont sphériques.

4. Élément structural d'équilibrage selon la revendication 2, dans lequel lesdites première et deuxième pluralité de poids (50, 51) sont cylindriques et en forme de disque.

5. Élément structural d'équilibrage selon la revendication 1, dans lequel ladite première gorge (34) est une gorge extérieure située à proximité de la circonférence extérieure dudit élément et ladite deuxième gorge (35) est une gorge intérieure concentrique à ladite première gorge ou gorge extérieure (34) et positionnée à l'intérieur de celle-ci.

6. Élément structural d'équilibrage selon la revendication 5, dans lequel ladite première pluralité de poids (40) contenus dans ladite première gorge extérieure (34) sont plus lourds que ladite deuxième pluralité de poids (41) contenus dans ladite deuxième gorge intérieure (35).

7. Élément structural d'équilibrage selon la revendication 6, dans lequel ledit élément comprend des première et deuxième moitiés (90, 91) sensiblement symétriques, et des moyens (92, 93) servant à accoupler lesdites moitiés (90, 91), lesdites moitiés pouvant être positionnées autour d'un arbre rotatif (32).

8. Élément structural d'équilibrage selon la revendication 5, dans lequel lesdites première et deuxième gorges annulaires (80, 81) sont formées sur une face (73) dudit élément, ledit élément comprenant encore une deuxième face (74) opposée à ladite première face (73), ladite deuxième face (74) ayant des troisième et quatrième gorges annulaires (80, 95), une troisième pluralité de poids (85) librement mobiles dans ladite troisième gorge annulaire (80), une quatrième pluralité de poids (86) librement mobiles dans ladite quatrième gorge annulaire (95), ladite pluralité de poids (85) contenus dans ladite troisième gorge annulaire étant sensiblement de même poids et de même dimension, ladite quatrième pluralité de poids (86) contenus dans ladite quatrième gorge annulaire (95) étant sensiblement de même poids et de même dimension, ledit poids et ladite dimension de ladite quatrième pluralité de poids (86) étant différents dudit poids et de ladite dimension de ladite troisième pluralité de poids (85).

9. Élément structural d'équilibrage selon la revendication 8, dans lequel les poids contenus dans chacune desdites gorges sont sphériques.

10. Procédé d'équilibrage dynamique d'un élément tournant comprenant les phases consistant à positionner une première pluralité de poids (4()) ayant la même dimension et le même poids dans une première gorge annulaire (34) ménagée dans une structure tournante, positionner une deuxième pluralité de poids (41) ayant la même dimension et le même poids dans une deuxième gorge annulaire (35) ménagée dans ladite structure tournante, et faire tourner ladite structure tout en permettant auxdites première et deuxième pluralités de poids (40, 41) de se déplacer librement dans lesdites première et deuxième gorges annulaires (34, 35), caractérisé en ce que le poids et la dimension de ladite deuxième pluralité de poids (41) contenus dans ladite deuxième gorge annulaire (35) sont différents du poids et de la dimension de ladite première pluralité de poids (40) contenus dans ladite première gorge annulaire (34).

11. Procédé d'équilibrage dynamique d'un élément tournant selon la revendication 10, dans lequel la circonférence interne extérieure desdites première et deuxième gorges annulaires (11, 12) est identique pour les deux gorges.

12. Procédé d'équilibrage dynamique d'un élément tournant selon la revendication 10, dans lequel ladite première gorge annulaire (34) est coaxiale à ladite deuxième gorge annulaire (35) et placée à l'extérieur de celle-ci.

13. Machine à laver possédant un premier cylindre qui tourne autour d'un axe de récipient, au moins un élément structural d'équilibrage (402) ayant un axe et monté concentriquement audit axe du récipient, ledit élément structural d'équilibrage (402) possédant au moins deux passages (404, 405), des poids mobiles (407, 408) contenus dans chacun desdits passages (404, 405), lesdits poids mobiles (407) contenus dans ledit premier passage (405) étant tous sensiblement de même dimension, lesdits poids mobiles (408) contenus dans ledit deuxième passage (404) étant sensiblement tous de même dimension, caractérisée en ce que les poids mobiles (408) contenus dans ledit deuxième passage (404) sont d'une dimension différente de celle des poids mobiles (405) contenus dans ledit premier passage (407).

14. Machine à laver selon la revendication 13, dans laquelle lesdits poids mobiles (408) contenus dans ledit deuxième passage (404) et lesdits poids mobiles (405) contenus dans ledit premier passage (407) sont sphériques.

15. Élément structural d'équilibrage selon la revendication 2 ou 3, et comprenant en outre un élément tournant (400) de machine à laver, ledit élément structural d'équilibrage (402) étant associé fonctionnellement audit élément (400) de la machine à laver.
